# EUROPÄISCHE PATENTANMELDUNG

(11) **EP 2 141 049 A1**
(43) Veröffentlichungstag der Anmeldung: **06.01.2010**
(21) Anmeldenummer: 08012124.7
(22) Anmeldetag: 04.07.2008
(51) Int. Cl.: B60Q 1/26, B60Q 1/28, B60Q 1/56, B60R 13/10

(54) **Halterungsvorrichtung für ein Kennzeichenschild**

(71) Anmelder: Sauer, Arno Martin, 83471 Berchtesgaden (DE); Moderegger, Bernd, 83471 Berchtesgaden (DE); Sievers, Adolf, 30966 Hemmingen (DE)
(72) Erfinder: Sauer, Arno Martin, 83471 Berchtesgaden (DE)
(74) Vertreter: Hartz, Nikolai

(57) **Zusammenfassung**

Halterungsvorrichtung (10) für ein Kennzeichenschild, die einen Rahmen (12) umfasst, der eine Anbringungsfläche (14) zur Fixierung und rückseitigen Beleuchtung eines Schildes aufweist, um die Schildoberfläche in einer vorbestimmten Orientierung zu präsentieren, wenn der Rahmen (12) an einem Fahrzeug befestigt ist; eine Beleuchtungseinrichtung (16) mit einer Lichtaustrittsfläche, die an dem Rahmen (12) vorgesehen wird, so dass das Schild von oben beleuchtet wird, wenn der Rahmen an dem Fahrzeug befestigt ist, wobei die Beleuchtungseinrichtung derart angeordnet ist, dass in keinem Punkt der Schildoberfläche, die von der Beleuchtungseinrichtung beleuchtet werden soll, der Winkel des Lichteinfalls auf die Oberfläche des Schildes 82° überschreitet, wobei dieser Winkel von demjenigen Rand der Lichtaustrittsfläche der Beleuchtungseinrichtung aus gemessen wird, der von der Oberfläche des Schildes am weitesten entfernt ist.

## Beschreibung

Die vorliegende Erfindung betrifft eine universell einsetzbare Halterungsvorrichtung für ein Kennzeichenschild, dessen Kennzeichen mit mehreren Lichtquellen aus unterschiedlichen Richtungen beleuchtet werden kann, die insbesondere unter Mischlichtbedingungen eine gute Erkennbarkeit des Kennzeichens gewährleisten. Die vorliegende Erfindung betrifft in einer besonderen Ausführungsform eine Halterungsvorrichtung, die neben einem Bereich für ein Kennzeichenschild, einen weiteren beleuchteten Bereich aufweist, der als weiterer Informationsträger, beispielsweise als Werbefläche, verwendet werden kann.

Halterungsvorrichtungen für Kennzeichenschilder sind bekannt. Herkömmlicherweise umfassen gattungsgemäße Halterungsvorrichtungen einen Rahmen, der an einem Fahrzeug befestigt wird und an dem ein retroreflektierendes lichtundurchlässiges Kennzeichenschild befestigt wird. Zur Verbesserung der Erkennbarkeit des Schildes, insbesondere bei Dunkelheit, kann dessen Oberfläche von einer Beleuchtungseinrichtung beleuchtet werden, die unabhängig von der Halterungsvorrichtung am Fahrzeug vorgesehen wird. Eine solche Beleuchtung erfolgt regelmäßig lediglich für das hintere Kennzeichenschild.

Eine Halterungsvorrichtung für ein Kennzeichenschild mit einer eingebauten Beleuchtungseinrichung ist aus der US-A 1,368,026 bekannt. Die Vorrichtung umfasst eine Anbringungsfläche zur Fixierung eines Kennzeichenschildes, um die Schildoberfläche in einer vorbestimmten Orientierung zu präsentieren, wenn die Vorrichtung an einem Fahrzeug befestigt ist. Die Halterungsvorrichtung umfasst weiterhin eine Glühlampe als Beleuchtungseinrichtung, die an der Vorrichtung vorgesehen wird, so dass das Schild von oben beleuchtet wird, wenn die Vorrichtung an dem Fahrzeug befestigt ist.

Alternativ wurden transparente Kennzeichenschilder vorgeschlagen, deren Oberfläche von der Rückseite beleuchtet werden. Aus der EP 1 512 583 ist ein transparentes Kennzeichenschild bekannt, das von der Rückseite beleuchtet werden kann und zu diesem Zweck in einer geeigneten die Rückseite beleuchtenden Halterungsvorrichtung montiert wird. Weitere transparente, rückseitig beleuchtete Kennzeichenschilder sind aus der DE-A 297 12 954 oder US-A 5,692,327 bekannt.

Aus der EP-A 1 262 373 ist als weiterer Schildertyp ein selbstleuchtendes, elektroluminezierendes Kennzeichenschild bekannt, das mit einer herkömmlichen Halterungsvorrichtung montiert wird und an das Bordnetz des Fahrzeugs angeschlossenen wird.

Die aus dem Stand der Technik bekannten Halterungsvorrichtungen schränken die Freiheit bei der Gestaltung des Fahrzeugs wegen der zu erfüllenden gesetzlichen Vorschriften ein und sind auch im Hinblick auf die Erkennbarkeit des Kennzeichens, im Hinblick auf den ästhetischen Eindruck der Schildoberfläche und die Beleuchtungssicherheit des Kennzeichenschildes aus folgenden Gründen noch nicht zufriedenstellend.

Aufgrund gesetzlicher Bestimmungen müssen die Beleuchtungseinrichtung und die Schildoberfläche derart aufeinander abgestimmt sein, dass insbesondere bei der hinteren Kennzeichenbeleuchtung der Lichteinfallswinkel auf die Schildoberfläche in bestimmten Grenzen liegt und dass außerdem kein Lichtstrahl unmittelbar nach hinten austritt. Eine Halterungsvorrichtung, die von einer am Fahrzeug vorgesehenen Beleuchtungseinrichtung beleuchtet wird, erfordert herkömmlicherweise eine spezielle Neigung der Anbringungsfläche am Fahrzeug, um den Lichteinfallswinkel auf die Schildoberfläche an die gesetzlichen Erfordernisse anzupassen. Dadurch muss eine Ausnehmung in der Karrosserieoberfläche in Kauf genommen werden, die im Fall der hinteren Kennzeichenhalterung zu einem Verlust von Stauraum im Kofferraum und auch bei der vorderen Kennzeichenhalterung zu einer unerwünschten Einschränkung der Gestaltungsmöglichkeiten führen kann. Ein transparentes, von der Rückseite beleuchtetes Kennzeichenschild läßt sich nicht ohne weiteres an einem Fahrzeug montieren ohne gesetzliche Bestimmungen zu verletzen. Ein selbstleuchtendes elektroluminezierendes Kennzeichen kann aufgrund einer Verminderung der Leuchtkraft gegen Ende der Lebensdauer seine selbstleuchtenden Eigenschaften vermindern oder gar vollständig einbüßen.

Weiterhin ist im Stand der Technik zwar bekannt, auf dem Rahmen der Halterungsvorrichtung Informationen bereitzustellen, so z. B. einen Werbetext oder ein Logo. Die Sichtbarkeit dieser Informationen ist jedoch vor allem, wenn das Fahrzeug in Bewegung ist, schlecht. Darüber hinaus ist aufgrund der Position am Rahmen der Halterungsvorrichtung nur mit einer geringen Aufmerksamkeit des Betrachters für die bereitgestellte Information zu rechnen.

Es ist daher Aufgabe der Erfindung eine Halterungsvorrichtung für ein Kennzeichenschild bereitzustellen, die die Freiheit bei der Gestaltung des Fahrzeugs nicht einschränkt und gleichwohl im Hinblick auf die Erkennbarkeit des Kennzeichens, den ästhetischen Eindruck der Schildoberfläche und die Beleuchtungssicherheit des Kennzeichenschildes insbesondere unter Mischlichtbedingungen herkömmlichen Halterungsvorrichtungen für Kennzeichenschilder überlegen ist und außerdem für jeden Kennzeichenschildertyp (lichtundurchlässig, halbtransparent, transparent, selbstleuchtend, aber jeweils retroreflektierend) geeignet ist, der bei einer Halterungsvorrichtung jeweils beliebig ausgetauscht werden kann.

Eine weitere Aufgabe der Erfindung besteht darin, einen weiteren Bereich auf einer Halterungsvorrichtung bereitzustellen, der als weiterer Informationsträger, beispielsweise als Werbefläche, verwendet werden kann und vom Betrachter wahrgenommen wird.

Diese Aufgabe wird erfindungsgemäß durch eine Halterungsvorrichtung für ein Kennzeichenschild gemäß Anspruch 1 gelöst, die einen Rahmen umfasst, der eine Anbringungsfläche zur Fixierung und rückseitigen Beleuchtung eines Schildes aufweist, um die Schildoberfläche in einer vorbestimmten Orientierung zu präsentieren, wenn der Rahmen an einem Fahrzeug befestigt ist, und eine Beleuchtungseinrichtung mit einer Lichtaustrittsfläche, die an dem Rahmen vorgesehen wird, so dass das Schild von oben beleuchtet wird, wenn der Rahmen an dem Fahrzeug befestigt ist, wobei die Beleuchtungseinrichtung derart angeordnet ist, dass in keinem Punkt der Schildoberfläche, die von der Beleuchtungseinrichtung beleuchtet werden soll, der Winkel des Lichteinfalls auf die Oberfläche des Schildes 82° überschreitet, wobei dieser Winkel von demjenigen Rand der Lichtaustrittsfläche der Beleuchtungseinrichtung aus gemessen wird, der von der Oberfläche des Schildes am weitesten entfernt ist.

Die vorliegende Erfindung beruht auf dem Konzept einer speziellen kombinierten Beleuchtung der Oberfläche eines Kennzeichenschildes. Einerseits wird die Oberfläche von einer relativ zur Oberfläche des Kennzeichenschildes fest angeordneten Beleuchtungseinrichtung mit einem bestimmten Lichteinfallswinkel beleuchtet. Andererseits leuchtet die Oberfläche des Schildes entweder durch eine hinter einem transparenten Kennzeichenschild vorgesehene Lichtquelle oder durch Verwendung eines selbstleuchtenden Kennzeichenschildes. Durch die Möglichkeit einer Beleuchtung mit verschiedenen Lichtquellen, einerseits über eine flächige vergleichsweise schwache Lichtquelle in der Schildebene und andererseits über eine punkt- bzw. linienförmige vergleichsweise starke Beleuchtungseinrichtung entsteht ein plastischer Eindruck, der die Erkennbarkeit des Kennzeichens insbesondere unter Mischlichtbedingungen gegenüber einem nur aus einer Richtung durch eine Lichtquelle beleuchteten Schild wesentlich erhöht. Der plastische Eindruck entsteht auch, aber nicht nur, wenn bereits eine erhabene Beschriftung vorliegt. Dies beruht darauf, dass die von oben beleuchtete Beschriftung und der leuchtende Hintergrund in verschiedenen Ebenen wahrgenommen werden. Dieser Eindruck bleibt auch in Gegenwart von Tageslicht erhalten, also unter Mischlichtbedingungen. Durch Verwendung eines Sensors kann die Helligkeit der Beleuchtung des Kennzeichenschildes an jede Tageslichtsituation angepasst werden und auf diese Weise die Erkennbarkeit des Kennzeichens optimiert werden. Durch die Verwendung spezieller Mittel kann die Helligkeit der Beleuchtungseinrichtung angepasst werden, wenn ein selbstleuchtendes Schild in der Halterung fixiert wird. Die Halterungsvorrichtung kann an deren Rahmen eine weitere Beleuchtungseinrichtung mit einer weiteren Lichtaustrittsfläche aufweisen, die unterhalb des montierten Schildes angeordnet ist. Diese weitere Lichtaustrittsfläche kann als Werbefläche ausgestaltet werden.

Die kombinierte Beleuchtung der Oberfläche eines Kennzeichenschildes erlaubt eine verbesserte Ästhetik des Kennzeichenschildes, insbesondere unter Mischlichtbedingungen, wenn das Kunstlicht der Beleuchtungseinrichtungen neben dem Tageslicht einen plastischen Eindruck von dem Kennzeichen vermitteln. Durch Anpassung der Lichtfarbe und Lichttemperatur kann die Ästhetik ebenfalls beeinflusst werden. Die Anordnung einer weiteren Lichtaustrittsfläche unterhalb des montierten Schildes beeinträchtigt die Ästhetik des Kennzeichenschildes nicht. Insbesondere, wenn die weitere Lichtaustrittsfläche nur zeitweise, beispielsweise bei Betätigung des Bremspedals, leuchtet, dann ist die Ästhetik des Kennzeichenschildes von der weiteren Lichtaustrittsfläche weitgehend unabhängig.

Durch die Verwendung von mehreren Lichtquellen wird darüber hinaus die Ausfallsicherheit bei der Beleuchtung des Kennzeichens erhöht.

Durch eine Fixierung der Position der Lichtquellen relativ zur Schildoberfläche wird eine Halterungsvorrichtung geschaffen, die im wesentlichen unabhängig wird von den Merkmalen des Bereichs eines Fahrzeugs an dem die Halterungsvorrichtung montiert wird. Dadurch wird ein hohes Maß an Freiheit bei der Gestaltung des Fahrzeugs geschaffen, wobei insbesondere auf spezielle Aussparungen in der Karosserie zur Aufnahme einer Beleuchtungseinrichtung und Bereitstellung einer entsprechend orientierten Anbringungsfläche verzichtet werden kann.

Eine erfindungsgemäße Halterungsvorrichtung ist für jeden Kennzeichenschildertyp geeignet ist, wobei dieser bei einer Halterungsvorrichtung jeweils beliebig ausgetauscht werden kann.
Figur 1 zeigt eine perspektivische Ansicht auf die Oberseite einer erfindungsgemäßen Halterungsvorrichtung;
Figur 2 zeigt eine Detailansicht einer perspektivischen Ansicht des linken Seitenbereichs der erfindungsgemäßen Halterungsvorrichtung aus Figur 1 in der Draufsicht;
Figur 3 zeigt eine Seitenansicht der erfindungsgemäßen Halterungsvorrichtung aus Figur 1 und 2 im Schnitt;
Figur 4 zeigt eine perspektivische Ansicht auf die Oberseite einer weiteren erfindungsgemäßen Halterungsvorrichtung;
Figur 5 zeigt eine Draufsicht auf die erfindungsgemäße Halterungsvorrichtung aus Figur 4;
Figur 6 zeigt eine perspektivische Ansicht auf die Oberseite einer erfindungsgemäßen Halterungsvorrichtung ohne Verblendungen;
Figur 7 zeigt eine Draufsicht auf die erfindungsgemäße Halterungsvorrichtung aus Figur 6.
Figur 8 zeigt eine perspektivische Ansicht auf die Oberseite eines Rahmens einer erfindungsgemäßen Halterungsvorrichtung, die mit einem selbstleuchtenden Schild verwendet werden kann oder in die zur Verwendung mit einem transparenten oder halbtransparenten Schild eine Anbringungsfläche eingesetzt werden kann;
Figur 9 zeigt eine Draufsicht auf den Rahmen aus Figur 8, wobei Durchbrechungen gezeigt werden, an denen die Halterungsvorrichtung mit Befestigungsmitteln an einem Fahrzeug befestigt werden können.
Figur 10 zeigt eine Querschnittsansicht eines in Figur 8 gezeigten Rahmens.
Figur 11 zeigt eine perspektivische Ansicht auf die Oberseite des erfindungsgemäßen Rahmens aus Figur 8 ohne Verblendungen;
Figur 12 zeigt eine Draufsicht auf den Rahmen aus Figur 11.
Figur 13 zeigt eine perspektivische Ansicht auf die Oberseite von Verblendungen für eine erfindungsgemäße Halterungsvorrichtung, die auch als weitere Lichtaustrittsflächen ausgestaltet werden können.
Figur 14 zeigt eine Draufsicht auf Verblendungen für eine erfindungsgemäße Halterungsvorrichtung, die auch als weitere Lichtaustrittsflächen ausgestaltet werden können.
Figur 15 zeigt eine perspektivische Ansicht auf die Oberseite eines erfindungsgemäßen Rahmens ohne Verblendungen, wobei am unteren Rand des Rahmens Bereiche vorgesehen sind, die weitere Lichtquellen beherbergen können für eine weitere Lichtaustrittsfläche.
Fig. 16 zeigt eine Draufsicht auf einen linken Seitenbereich eines erfindungsgemäßen Rahmens ohne Verblendungen, wobei am unteren Rand des Rahmens Bereiche vorgesehen sind, die weitere Lichtquellen beherbergen können für eine weitere Lichtaustrittsfläche.

### Beschreibung der bevorzugten Ausführungsformen

Eine Halterungsvorrichtung für ein Kennzeichenschild gemäß Anspruch 1, umfasst einen Rahmen. Der Rahmen kann einstückig oder mehrstückig sein. Der Rahmen dient zur mittelbaren oder unmittelbaren Befestigung der Halterungsvorrichtung an dem Fahrzeug. Zu diesem Zweck kann der Rahmen Befestigungsvorrichtungen oder Bestandteile davon umfassen, die eine Befestigung der Halterungsvorrichtung an dem Fahrzeug, beispielsweise durch eine Schraub- oder Steckverbindung, ermöglichen. Jeweils drei Kontaktpunkte des Rahmens mit denen dieser an dem Fahrzeug anliegt können eine Kontaktebene bilden. Vorzugsweise liegt der Rahmen an mehr als drei Punkten an dem Fahrzeug an und sämtliche Kontaktpunkte liegen auf derselben Kontaktebene. Dies hat den Vorteil, dass es zur Befestigung der Halterungsvorrichtung lediglich einer ebenen Fläche an dem Fahrzeug bedarf, die vorzugsweise mindestens so groß ist, wie die Außenkontur der Halterungsvorrichtung. Es werden keine weiteren Anforderungen an die spezielle Neigung der Kontaktfläche gestellt, so dass es eine vormals nicht realisierbare Designfreiheit bei der Gestaltung der Fahrzeugkarosserie gibt, die insbesondere Ausnehmungen überflüssig macht, die Stauraum in dem Fahrzeug verkleinern.

Der Rahmen ist zur Aufnahme und Fixierung von Kennzeichenschildern geeignet. Die Kennzeichenschilder werden vorzugsweise lösbar mit dem Rahmen verbunden, so dass eine nachträgliche Entnahme des Kennzeichenschildes aus dem Rahmen möglich ist sowie eine Aufnahme und Fixierung desselben Kennzeichenschildes oder eines anderen Kennzeichenschildes, das gegebenenfalls auch von einem anderen Typ sein kann. Es ist vorzugsweise möglich, ein herkömmliches transparentes Kennzeichenschild, wie es aus der EP-A 1 512 583 bekannt ist, mit einer erfindungsgemäßen Halterungsvorrichtung zu verwenden und nach deren Entnahme entweder ein anderes Schild diesen Typs oder ein anders Schild eines anderen Typs, wie beispielsweise ein selbstleuchtendes Kennzeichenschild, wie es aus der WO2006/037607 bekannt ist, zu montieren. In einer bevorzugten Ausführungsform ist die Größe des Rahmens verstellbar ist, um Schilder verschiedener Größen in der Halterungsvorrichtung aufzunehmen. Vorzugsweise ist das Auswechseln eines Kennzeichenschildes in dem Rahmen des Halterungsvorrichtung der vorliegenden Erfindung ein einfacher Vorgang, der unter Lösen und Herstellung von Schraub- oder Klemmverbindungen erfolgt und bei dem gegebenenfalls auch die Anbringungsfläche ausgetauscht wird, aber in einfacher Weise von einem Fahrzeughalter durchgeführt werden kann.

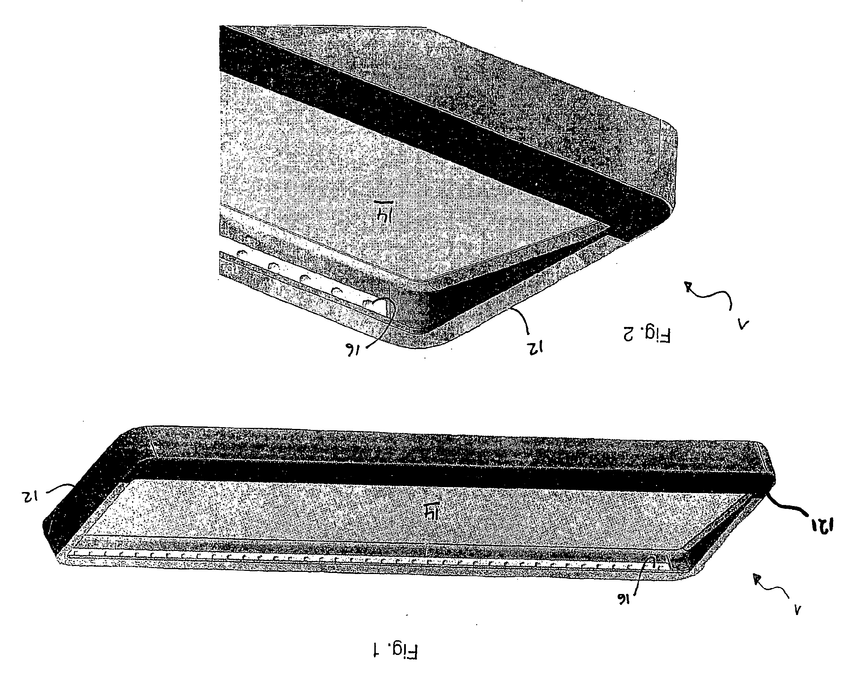

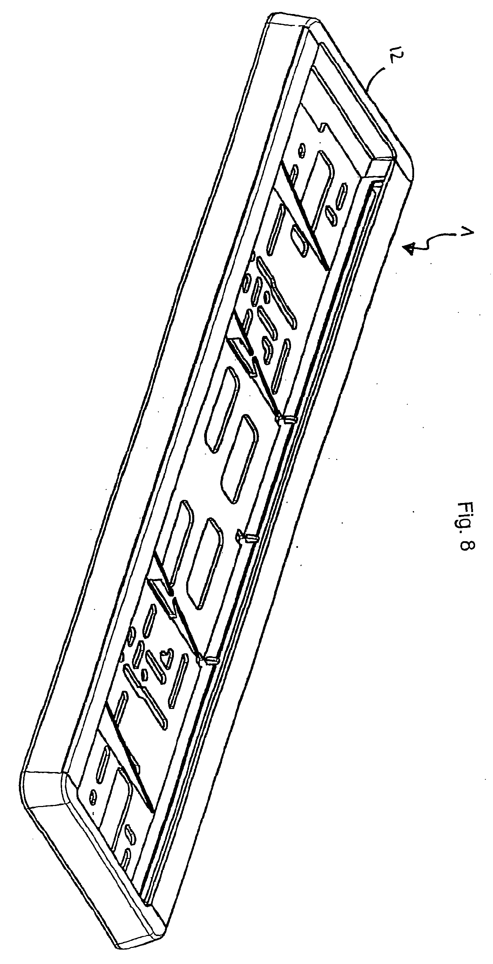

Der Rahmen umfasst weiterhin eine Anbringungsfläche zur Fixierung und rückseitigen Beleuchtung eines Schildes. Vorzugsweise ist die Anbringungsfläche mindestens so groß wie die Fläche des Schildes so dass das Schild vollständig auf der Anbringungsfläche aufliegt. Die Anbringungsfläche kann aber auch kleiner sein als die Fläche des Schildes oder aus einer Mehrzahl von Teilflächen bestehen. Insbesondere, wenn ein selbstreflektierendes Schild verwendet wird, dann ist es nicht notwendig, dass die Anbringungsfläche so groß ist wie die Fläche des Schildes. In diesem Fall kann die Größe der Anbringungsfläche reduziert werden, wobei jedoch eine Fixierung des Schildes gewährleistet sein muss. Die Anbringungsfläche ist an dem Rahmen fixiert, um die Schildoberfläche in einer vorbestimmten Orientierung zu präsentieren, wenn der Rahmen auf der Kontaktebene bestimmungsgemäß an einem Fahrzeug befestigt ist. Die Fixierung der anbringungsfläche kann permanent oder lösbar sein. Daher kann die Schildoberfläche in einer Ausführungsform integraler Bestandteil des Rahmens sein, wie dies in den Figuren 1 bis 7 gezeigt wird, und in einer anderen Ausführungsform lösbar mit dem Rahmen verbunden werden, wie dies in den Figuren 8 bis 13 gezeigt wird.

Die Anbringungsfläche kann die Rückseite des Kennzeichenschildes nach verschiedenen Verfahren beleuchten. Zur Beleuchtung der Rückseite des Schildes kann das Licht entweder durch die Anbringungsfläche treten oder alternativ durch Durchbrechungen die in der Anbringungsfläche vorgesehen sind.

Soweit das Licht zur Beleuchtung der Rückseite des Schildes durch die Anbringungsfläche tritt, kann jede Lichtquelle verwendet werden, die zur rückseitigen Beleuchtung eines Kennzeichenschildes im Stand der Technik vorgeschlagen wurde. Beispielsweise kann die Lichtquelle eine elektrolumineszierende Schicht oder Folie umfassen, die nach elektrischer Aktivierung Licht ausstrahlt. Beispielhaft seien elektrolumineszierende Schichten erwähnt, wie sie aus der WO9/20375 bekannt sind. Eine solche elektrolumineszierende Schicht umfasst herkömmlicherweise ein polymeres Bindemittel in dem ein anorganisches elektrolumineszierendes Material dispergiert ist. Geeignete anorganische elektrolumineszierende Materialien können in Abhängigkeit von der gewünschten Farbe gewählt werden, wobei auch Gemische solcher Materialien verwendet werden können. Es können auch organische elektrolumineszierende Materialien verwendet werden, die unter der Bezeichnung OLEDs (Organic Light Emitting Diodes) bekannt sind und typischerweise ein Substrat und darauf aufgebracht eine oder mehrere organische Schichten zwischen zwei Elektroden umfassen. Die organischen Schichten können elektrisch aktiviert werden und strahlen dadurch Licht nach dem Prinzip der Injektionslumineszenz ab. Brauchbare OLEDs werden beispielsweise in der US-A 6,608,333 oder US-A 6,501,218 beschrieben. Die Lichtquelle kann auch herkömmliche LED (Light Emitting Diodes) enthalten.

Gemäß einer speziellen Ausführungsform ist es auch möglich, dass die Anbringungsfläche Lichtleiter umfasst, mit einer Vorderseite auf der das Kennzeichenschild angebracht wird, einer Rückseite auf der gegenüberliegenden Seite sowie einer oder mehrerer Seitenflächen, sowie einer oder mehrerer Lichtquellen, die zur Beleuchtung des Lichtleiters zumindest an einem Teilbereich von dessen Seitenflächen angeordnet sind, wobei die gegenüberliegende Seite dieser Seitenflächen lichtundurchlässig sind, um eine Verlust von Licht zu vermeiden. Die Lichtquelle kann eine längliche Lichtquelle sein, beispielsweise eine Leuchtröhre oder eine Reihe von punktförmigen Lichtquellen. Innerhalb des Lichtleiters wird das Licht durch Totalreflexion geleitet und tritt an der Vorderseite zur rückseitigen Beleuchtung des Kennzeichenschildes aus.

Die Kontaktebene, die von den Kontaktpunkte des Rahmens mit denen dieser an dem Fahrzeug anliegt, gebildet wird, kann vorzugsweise mit der Ebene der Anbringungsfläche und damit auch mit der Schildoberfläche einen Winkel von mehr als 0° bilden. In einer bevorzugten Ausführungsform ist dieser Winkel größer als 4°, insbesondere mindestens 8°.

Der Rahmen umfasst weiterhin eine Beleuchtungseinrichtung mit einer Lichtaustrittsfläche, die an dem Rahmen vorgesehen wird, so dass das Schild von oben beleuchtet wird, wenn der Rahmen an dem Fahrzeug befestigt ist, wobei die Beleuchtungseinrichtung derart angeordnet ist, dass in keinem Punkt der Schildoberfläche, die von der Beleuchtungseinrichtung beleuchtet werden soll, der Winkel des Lichteinfalls auf die Oberfläche des Schildes 82° überschreitet, wobei dieser Winkel von demjenigen Rand der Lichtaustrittsfläche der Beleuchtungseinrichtung aus gemessen wird, der von der Oberfläche des Schildes am weitesten entfernt ist.

Für den Fall, dass die Beleuchtungseinrichtung einen äußeren Rand der leuchtenden Oberfläche aufweist, der parallel zur Oberfläche des Kennzeichenschildes verläuft, so ist der äußerste Rand der leuchtenden Oberfläche der Beleuchtungseinrichtung, der am weitesten von der Oberfläche des Kennzeichenschildes entfernt ist, der Mittelpunkt der Umrandung der leuchtenden Oberfläche, die parallel ist zum Kennzeichenschild und am weitesten entfernt von der Oberfläche des Kennzeichenschildes.

Die Beleuchtungseinrichtung ist vorzugsweise so vorgesehen, dass kein Lichtstrahl senkrecht zur Schildoberfläche austritt. Aus diesem Grund umfasst der Rahmen eine lichtundurchlässige Verblendung, die die Beleuchtungseinrichtung außerhalb der Schildoberfläche abdeckt. Der Rahmen kann jedoch ein Tagfahrlicht aufweisen, das Licht senkrecht zur Schildoberfläche abstrahlt.

In einer weiteren bevorzugten Ausführungsform umfasst der Rahmen der erfindungsgemäßen Halterungsvorrichtung einen Inverter, der zum Betrieb eines selbstleuchtenden Kennzeichens geeignet ist. Die Halterungsvorrichtung kann Mittel umfassen, die die Helligkeit der Beleuchtungseinrichtung anpassen, wenn ein selbstleuchtendes Schild in der Halterung fixiert wird. Insbesondere kann die Halterungsvorrichtung eine elektrische Stromversorgung für ein selbstleuchtendes Schild aufweisen. Die elektrische Stromversorgung kann mit dem Bordnetz des Fahrzeugs verbunden sein oder eine davon unabhängige Stromquelle umfassen. Vorzugsweise umfasst ist die elektrische Stromversorgung mit dem Bordnetz verbunden. Die Mittel, die die die Helligkeit der Beleuchtungseinrichtung anpassen, wenn ein selbstleuchtendes Schild in der Halterung fixiert wird kann an die elektrische Stromversorgung für das selbstleuchtende Schild gekoppelt werden, so dass eine Anpassung der Helligkeit der Beleuchtungseinrichtung erfolgt sobald ein selbstleuchtendes Schild fixiert wird bzw. an die Stromversorgung angeschlossen werden. Eine Anpassung der Helligkeit der Beleuchtungseinrichtung bedeutet, dass die Helligkeit verringert wird. Alternativ kann die Helligkeit jedoch auch erhöht werden, was jedoch in den meisten Fällen nicht notwendig ist. Schließlich kann die Helligkeit auch vollständig abgeschaltet werden. Die Anpassung der Helligkeit kann durch Abschaltung eines oder mehrerer Leuchtmittel erfolgen und/oder durch ein Dimmen aller Leuchtmittel.

Gemäß einer weiteren bevorzugten Ausführungsform umfasst die erfindungsgemäße Halterungsvorrichtung einen RFID, der an dem Rahmen vorgesehen ist. Der RFID kann aktiv oder passiv sein und erlaubt ein drahtloses Auslesen von auf dem RFID gespeicherten Daten. Die Daten können beispielsweise von einer Mautstelle zur Rechnungsstellung eines Mautbetrags verwendet werden.

Die Halterungsvorrichtung kann weiterhin einen Sensor aufweisen, der die Helligkeit der Beleuchtungseinrichtung in Abhängigkeit vom Umgebungslicht regelt. Neben der Regelung der Helligkeit der Beleuchtungseinrichtung kann auch eine Regelung der rückseitigen Beleuchtung des Kennzeichenschildes erfolgen.

Gemäß einer bevorzugten Ausführungsform kann die Halterungsvorrichtung eine weitere Beleuchtungseinrichtung mit einer weiteren Lichtaustrittsfläche aufweisen, die unterhalb des montierten Schildes angeordnet ist. Insbesondere ist diese weitere Lichtaustrittsfläche geeignet Informationen anzuzeigen. Auf diese Weise ist diese Lichtaustrittsfläche geeignet als Werbefläche zu dienen. Entsprechend wird die Lichtaustrittsfläche so angeordnet, dass eine Sichtbarkeit der Werbefläche gewährleistet ist, wenn die Halterungsvorrichtung bestimmungsgemäß montiert wird. Die weitere Beleuchtungseinrichtung kann an den Stromkreis des Bremslichts gekoppelt sein, so dass die Lichtaustrittsfläche insbesondere dann aufleuchtet, wenn das Bremspedal des Fahrzeugs betätigt wird. Die weitere Beleuchtungseinrichtung kann jedoch auch dadurch unabhängig von der Betätigung des Bremspedals des Fahrzeugs leuchten. Beispielsweise kann die weitere Beleuchtungseinrichtung permanent leuchten oder blinken. Die Helligkeit der weiteren Beleuchtungseinrichtung kann den Umgebungsverhältnissen angepasst werden. Zu diesem Zweck kann ein Sensor vorgesehen werden oder es kann ein auf einen vorhandenen Sensor zurückgegriffen werden.

Nun wird die Erfindung anhand einer in den Zeichnungen gezeigten bevorzugten Ausführungsform beschrieben.

Fig. 1 zeigt eine erfindungsgemäße Halterungsvorrichtung 1 für ein Kennzeichenschild (nicht gezeigt). Die Halterungsvorrichtung umfasst einen Rahmen 12. Der Rahmen weist eine Anbringungsfläche 14 zur Fixierung des Schildes auf. Durch Fixierung des Schildes auf der Anbringungsfläche 14 wird die Schildoberfläche in einer vorbestimmten Orientierung präsentiert, wenn der Rahmen 12 an einem Fahrzeug befestigt ist. An dem Rahmen 12 ist weiterhin eine Beleuchtungseinrichtung 16 vorgesehen. Die Beleuchtungseinrichtung 16 weist eine Lichtaustrittsfläche auf, die der Außenkontur der Leuchtmittel entspricht, bei denen es sich in der in Figur 1 gezeigten Ausführungsform um LEDs handelt. Durch die Beleuchtungseinrichtung 16 kann das Schild von oben beleuchtet werden, wenn die Halterungsvorrichtung an dem Fahrzeug befestigt ist. Die Beleuchtungseinrichtung 16 ist derart angeordnet, dass in keinem Punkt der Schildoberfläche, die von der Beleuchtungseinrichtung beleuchtet werden soll, der Winkel des Lichteinfalls auf die Oberfläche des Schildes 82° überschreitet, wenn dieser Winkel von demjenigen Rand der Lichtaustrittsfläche der Beleuchtungseinrichtung aus gemessen wird, der von der Oberfläche des Schildes am weitesten entfernt ist.

Die Beleuchtungseinrichtung 16 besteht aus einer Reihe von LED Leuchten, die im oberen Bereich des Rahmens hinter einer Verblendung vorgesehen sind. Die LEDs werden über das Bordnetz des Fahrzeugs mit Strom versorgt und dienen zur Beleuchtung des Schildes von oben. Die Beleuchtungseinrichtung 16 ist relativ zur Anbringungsfläche 14 zumindest während des Gebrauchs fixiert. Es ist möglich, dass die Anbringungsfläche 14 im Hinblick auf die Position verändert werden kann, speziell hinsichtlich des Neigungswinkels. Dabei soll jedoch in keinem Punkt der Schildoberfläche der Winkel des Lichteinfalls 82° überschreiten, wobei dieser Winkel von dem Rand der Lichtaustrittsfläche der Beleuchtungseinrichtung ausgemessen wird, der von der Oberfläche des Kennzeichenschildes am weitesten entfernt ist. Nachdem die Ausführungsform in Figur 1 mehrere Beleuchtungseinrichtungen umfaßt, gilt diese Bedingung nur jeweils für den Teil des Kennzeichenschildes, der durch das entsprechende Leuchtmittel beleuchtet werden soll. Die Beleuchtungseinrichtung 16 erstreckt sich über die gesamte Breite der Halterungsvorrichtung 10. Auf diese Weise kann eine vollständige und gleichmäßige Ausleuchtung der Schildoberfläche erreicht werden. Es ist jedoch auch möglich die Beleuchtungseinrichtung 16 in mehrere Teilabschnitte zu unterteilen, die jeweils beabstandet vorgesehen werden oder lediglich eine einzige Beleuchtungseinrichtung vorzusehen. Es ist ferner möglich den Rahmen im Bereich der Beleuchtungseinrichtung durch reflektierende Elemente weiterzubilden, um auf diese Weise das Licht auf die Schildoberfläche zu lenken. Der Rahmen 12 weist eine weitere Lichtaustrittsfläche 121 auf, die unterhalb des montierten Schildes angeordnet ist. Die Beleuchtungseinrichtung für diese weitere Lichtaustrittsfläche kann im Rahmen vorgesehen werden oder als selbstleuchtende Verblendung ausgestaltet sein, die unterhalb des montierten Schildes angeordnet ist.

Figur 2 zeigt eine Detailansicht der linken oberen Ecke einer erfindungsgemäßen Halterungsvorrichtung 10, wobei zu erkennen ist, dass die Beleuchtungseinrichtung 16 von einer Verblendung 18 des Rahmens abgedeckt wird, so dass kein Licht direkt nach hinten abgestrahlt werden kann. Eine weitere Verblendung 20 befindet sich im unteren Bereich des Rahmens und kann in üblicher Weise beschriftet werden.

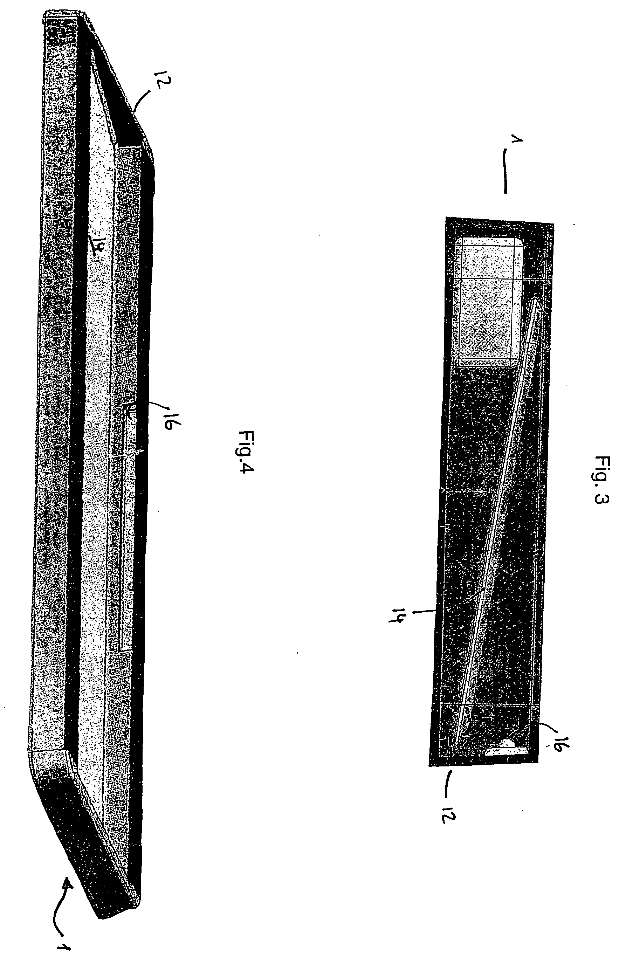

Figur 3 zeigt einen Querschnitt durch eine erfindungsgemäße Halterungsvorrichtung 10, wobei die Anbringungsfläche 14 relativ zur Kontaktfläche des Rahmens in einem Winkel fixiert wird. Durch die Aufteilung des Querschnitts der Halterungsvorrichtung in eine Hälfte auf der Seite der Schildoberfläche und eine Hälfte unterhalb der Schildoberfläche wird der von der Halterungsvorrichtung umschlossene Raum in zwei funktionelle Bereiche unterteilt. Einerseits liegt der Bereich unterhalb der Schildoberfläche als von der Umgebung durch den Rahmen und die Anbringungsfläche geschützter Raum vor, der zur Aufnahme insbesondere elektronischer Bauteile geeignet ist. Soweit es sich bei der Anbringungsfläche um eine transparente oder zumindest halbtransparente, Fläche handelt, die rückseitig beleuchtet wird, kann in diesem Bereich die weitere Beleuchtungseinrichtung sowie die erforderliche Elektronik vorgesehen werden. In dem Bereich oberhalb der Schildebene darf die Sichtbarkeit der Schildoberfläche nicht durch weitere lichtundurchlässige Elemente verstellt werden so dass es sich hierbei vorzugsweise um einen offenen Bereich handelt. Es ist möglich eine weitere transparente Abdeckung auf der Oberseite des Rahmens vorzusehen, der die Schildoberfläche vor Umwelteinflüssen schützt.

Figur 4 zeigt eine weitere Ausführungsform einer erfindungsgemäßen Halterungsvorrichtung 10, wobei die Beleuchtungseinrichtung 16 lediglich im mittleren Bereich des oberen Randes angeordnet ist.

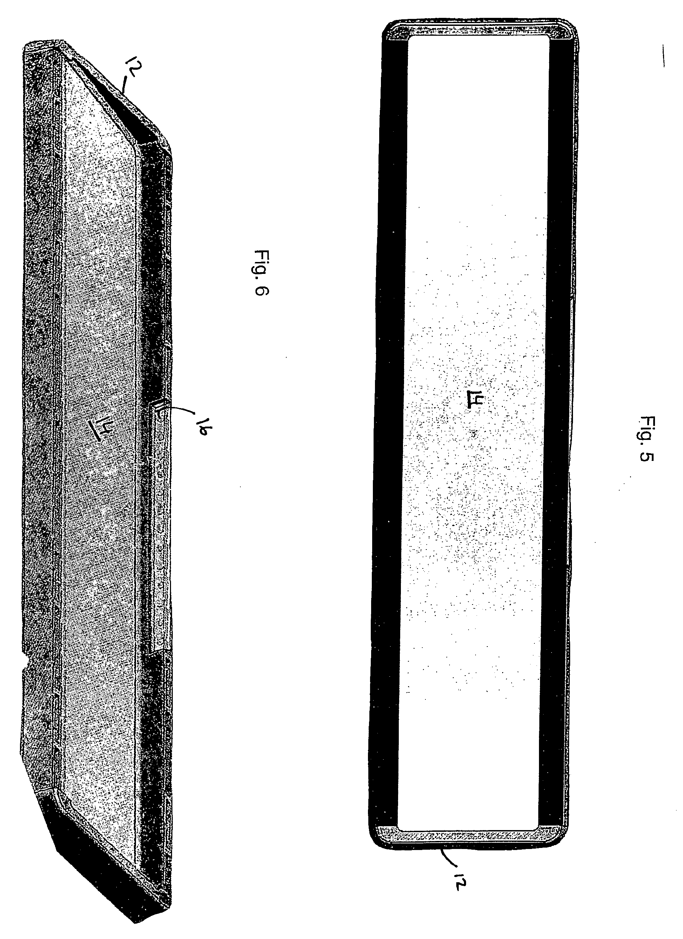

Figur 5 zeigt eine Draufsicht auf eine erfindungsgemäße Halterungsvorrichtung 10 einschließlich der Verblendungen 18, 19, die als auswechselbare Bauteile nachträglich mit einer Beschriftung versehen werden können.

Figur 6 zeigt die Ausführungsform aus Figur 5, wobei die Verblendungen abgenommen wurden. Es ist zu erkennen, dass der Rahmen durch eine doppelwandige Ausgestaltung stabilisiert ist, die über Rippen verbunden sind.

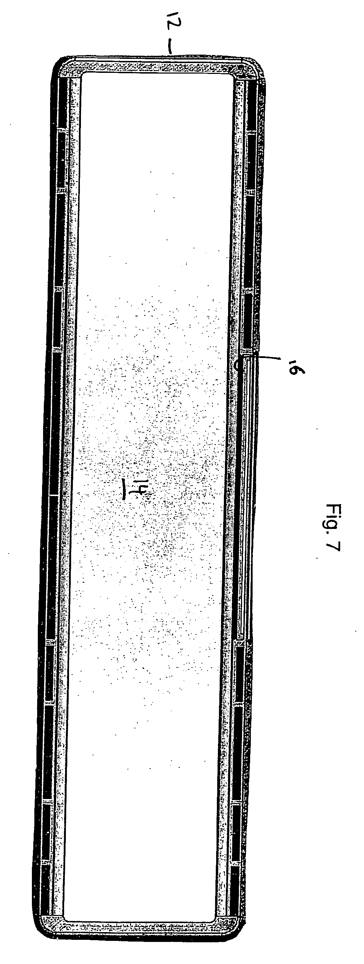

Figur 7 zeigt eine Draufsicht auf die in Figur 6 gezeigte Ausführungsform, wobei zu erkennen ist, dass die Verblendung erforderlich ist eine Abstrahlung von Licht senkrecht zur Kontaktebene der Halterungsvorrichtung zu verhindern.

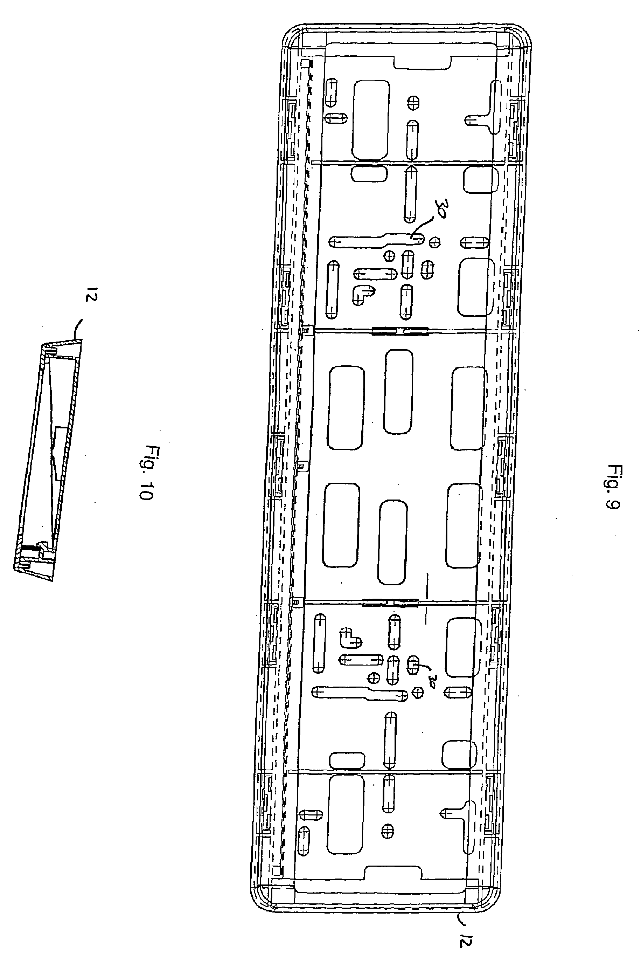

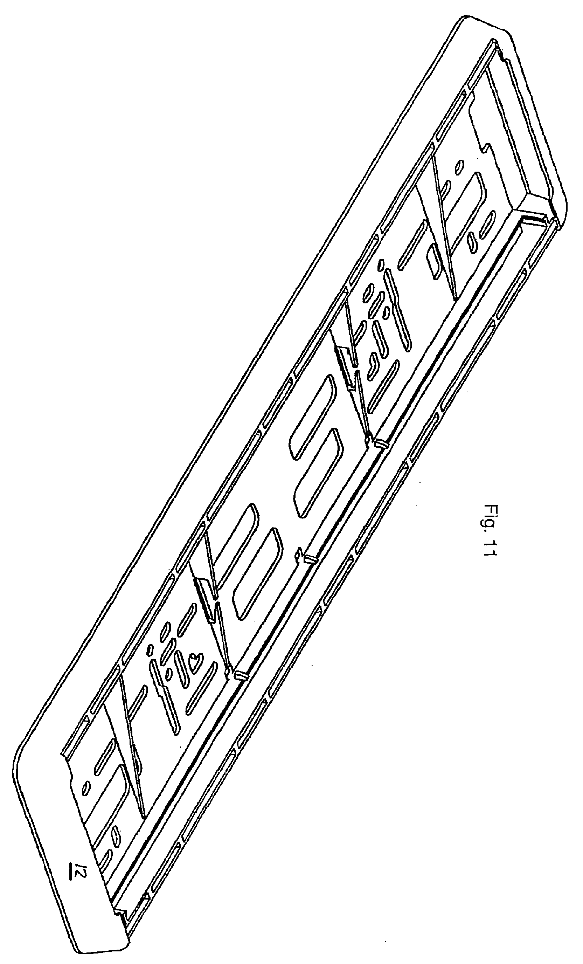

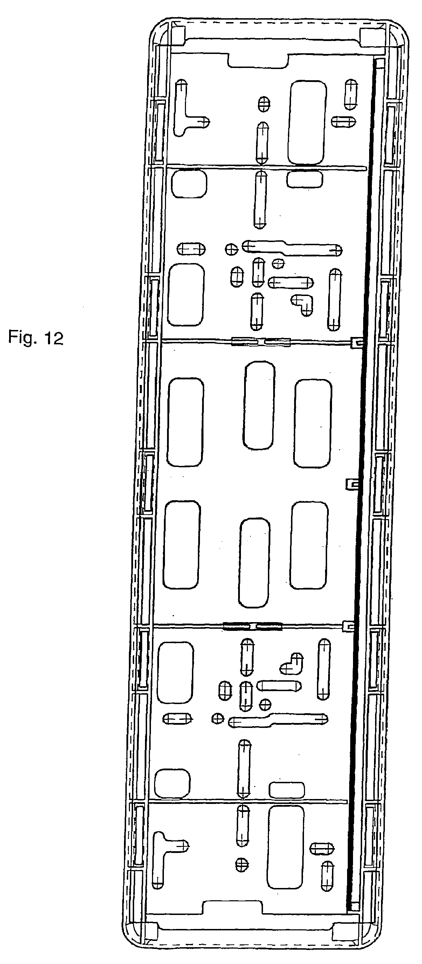

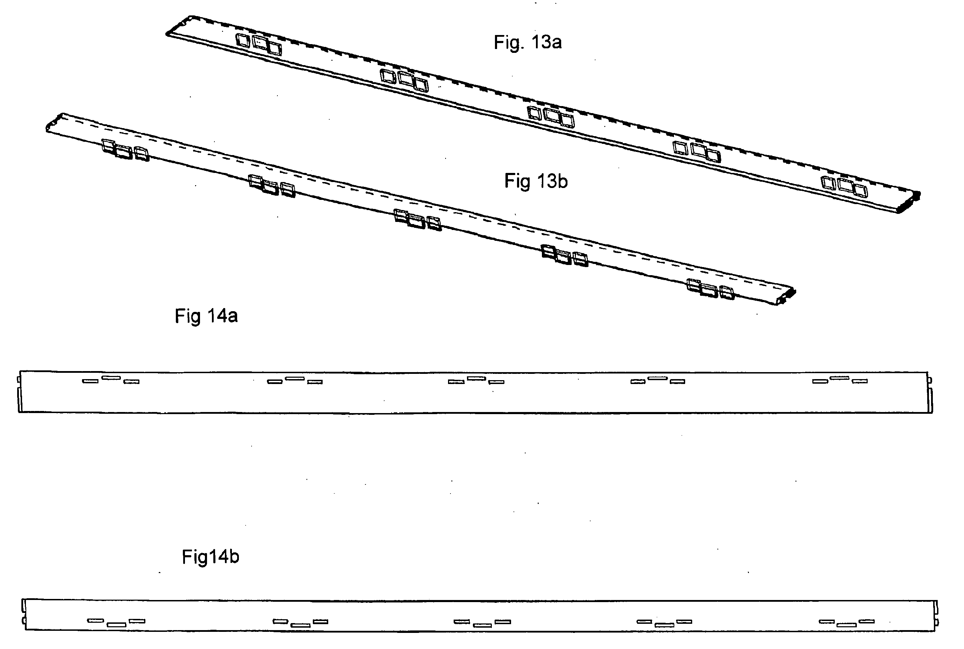

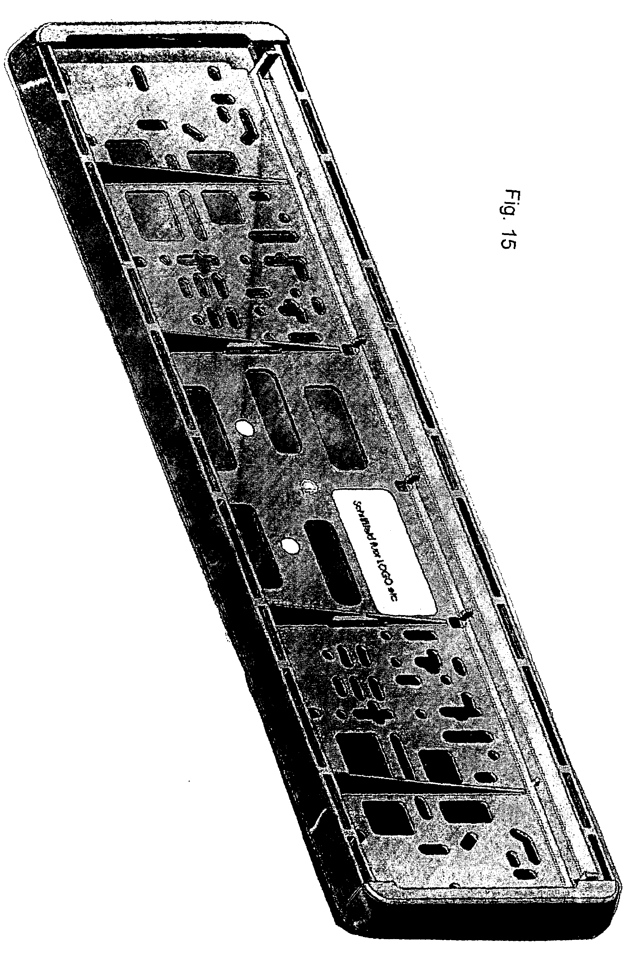

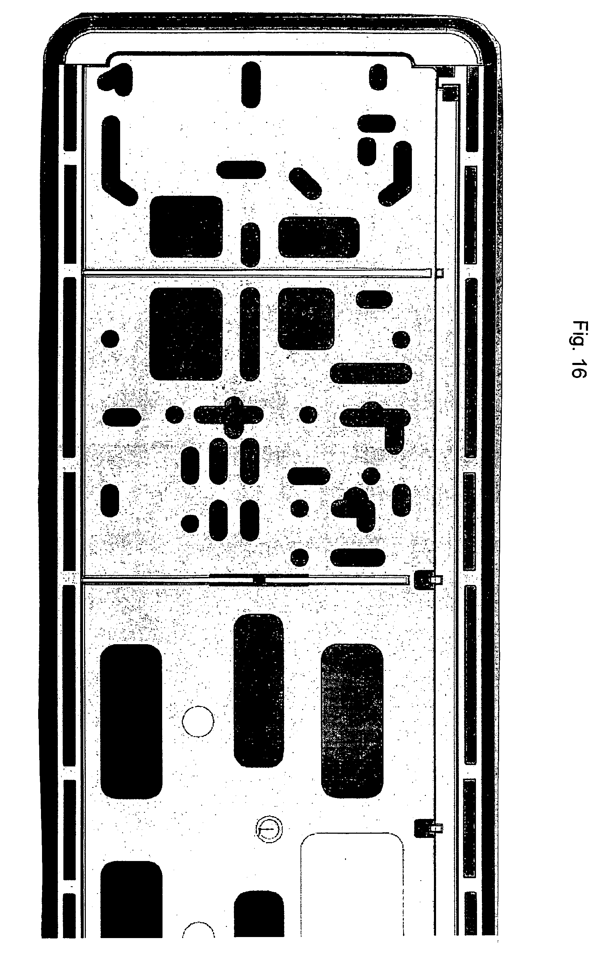

Figur 8 zeigt eine perspektivische Ansicht auf die Oberseite eines Rahmens einer erfindungsgemäßen Halterungsvorrichtung, die mit einem selbstleuchtenden Schild verwendet werden kann oder in die zur Verwendung mit einem transparenten oder halbtransparenten Schild eine Anbringungsfläche eingesetzt werden kann. Figur 9 zeigt eine Draufsicht auf den Rahmen aus Figur 8, wobei Durchbrechungen 30 gezeigt werden, an denen die Halterungsvorrichtung mit Befestigungsmitteln an einem Fahrzeug befestigt werden können. Figur 10 zeigt eine Querschnittsansicht eines in Figur 8 gezeigten Rahmens. Figur 11 zeigt eine perspektivische Ansicht auf die Oberseite des erfindungsgemäßen Rahmens aus Figur 8 ohne Verblendungen. Figur 12 zeigt eine Draufsicht auf den Rahmen aus Figur 11. Figur 13 zeigt eine perspektivische Ansicht auf die Oberseite von Verblendungen für eine erfindungsgemäße Halterungsvorrichtung. Figur 14 zeigt eine Draufsicht auf Verblendungen für eine erfindungsgemäße Halterungsvorrichtung. Figur 15 zeigt eine perspektivische Ansicht auf die Oberseite eines erfindungsgemäßen Rahmens ohne Verblendungen, wobei am unteren Rand des Rahmens Bereiche vorgesehen sind, die weitere Lichtquellen beherbergen können für eine weitere Lichtaustrittsfläche. Fig. 16 zeigt eine Draufsicht auf einen linken Seitenbereich eines erfindungsgemäßen Rahmens ohne Verblendungen, wobei am unteren Rand des Rahmens Bereiche vorgesehen sind, die weitere Lichtquellen beherbergen können für eine weitere Lichtaustrittsfläche.

## Patentansprüche

1. Halterungsvorrichtung (10) für ein Kennzeichenschild, die einen Rahmen (12) umfasst, der eine Anbringungsfläche (14) zur Fixierung und rückseitigen Beleuchtung eines Schildes aufweist, um die Schildoberfläche in einer vorbestimmten Orientierung zu präsentieren, wenn der Rahmen (12) an einem Fahrzeug befestigt ist;
eine Beleuchtungseinrichtung (16) mit einer Lichtaustrittsfläche, die an dem Rahmen (12) vorgesehen wird, so dass das Schild von oben beleuchtet wird, wenn der Rahmen an dem Fahrzeug befestigt ist, wobei die Beleuchtungseinrichtung derart angeordnet ist, dass in keinem Punkt der Schildoberfläche, die von der Beleuchtungseinrichtung beleuchtet werden soll, der Winkel des Lichteinfalls auf die Oberfläche des Schildes 82° überschreitet, wobei dieser Winkel von demjenigen Rand der Lichtaustrittsfläche der Beleuchtungseinrichtung aus gemessen wird, der von der Oberfläche des Schildes am weitesten entfernt ist.

2. Halterungsvorrichtung nach Anspruch 1, wobei die Beleuchtungseinrichtung im Rahmen hinter einer Verblendung vorgesehen ist, so dass kein Lichtstrahl unmittelbar senkrecht zur Kontaktebene der Halterungsvorrichtung austritt.

3. Halterungsvorrichtung nach einem der vorstehenden Ansprüche, **dadurch gekennzeichnet, dass** die Beleuchtungseinrichtung eine oder mehrere Leuchtdioden umfasst.

4. Halterungsvorrichtung nach einem der vorstehenden Ansprüche, **dadurch gekennzeichnet, dass** die Kontaktpunkte des Rahmens mit denen dieser an dem Fahrzeug anliegt eine Kontaktebene bilden, die mit der Ebene der Schildoberfläche einen Winkel von mindestens 8° bildet.

5. Halterungsvorrichtung nach einem der vorstehenden Ansprüche, **dadurch gekennzeichnet, dass** die Größe des Rahmens verstellbar ist, um Schilder verschiedener Größen aufzunehmen.

6. Halterungsvorrichtung nach einem der vorstehenden Ansprüche, **dadurch gekennzeichnet, dass** der Rahmen einen Inverter umfasst, der zum Betrieb eines selbstleuchtenden Kennzeichens geeignet ist.

7. Halterungsvorrichtung nach einem der vorstehenden Ansprüche, **dadurch gekennzeichnet, dass** der Rahmen einen RFID umfasst.

8. Halterungsvorrichtung nach einem der vorstehenden Ansprüche, **dadurch gekennzeichnet, dass** der Rahmen ein Tagfahrlicht aufweist, das Licht senkrecht zur Schildoberfläche abstrahlt.

9. Halterungsvorrichtung nach einem der vorstehenden Ansprüche, **dadurch gekennzeichnet, dass** ein Sensor vorgesehen wird, zur Regelung der Helligkeit der Beleuchtungseinrichtung in Abhängigkeit vom Umgebungslicht.

10. Halterungsvorrichtung nach einem der vorstehenden Ansprüche, **dadurch gekennzeichnet, dass** ein Sensor vorgesehen wird, zur Regelung der Helligkeit der Beleuchtungseinrichtung in Abhängigkeit vom Verschmutzungsgrad des Schildes.

11. Halterungsvorrichtung nach einem der vorstehenden Ansprüche, **dadurch gekennzeichnet, dass** die Anbringungsfläche einen Lichtleiter oder eine farblose lichtverteilende, Kunststoffplatte umfaßt, die von einer oder mehreren Lichtquellen beleuchtet werden, und die Verwendung von semitransparenten oder transparenten Schildern ermöglicht.

12. Halterungsvorrichtung nach einem der vorstehenden Ansprüche, wobei Anbringungsfläche zur Fixierung eines Schildes ein flächiger Körper ist, der die gesamte Schildfläche hinterlegt.

13. Halterungsvorrichtung nach Anspruch 12, **dadurch gekennzeichnet, dass** der flächige Körper ein aus lichtleitendem Material besteht.

14. Halterungsvorrichtung nach einem der vorstehenden Ansprüche, wobei Mittel vorgesehen sind, die die Helligkeit der Beleuchtungseinrichtung anpassen, wenn ein selbstleuchtendes Schild in der Halterung fixiert wird.

15. Halterungsvorrichtung nach einem der vorstehenden Ansprüche, wobei der Rahmen eine weitere Beleuchtungseinrichtung mit einer weiteren Lichtaustrittsfläche aufweist, die unterhalb des montierten Schildes angeordnet ist.
